Europäisches Patentamt

European Patent Office

Office européen des brevets

(19)

(11) Publication number: **0 021 640**
**B1**

(12) **EUROPEAN PATENT SPECIFICATION**

(45) Date of publication of patent specification: **10.04.85**

(51) Int. Cl.⁴: **G 01 F 3/22, F 16 B 19/00**

(21) Application number: **80301847.2**

(22) Date of filing: **03.06.80**

(54) **Dry gas meters.**

(30) Priority: **09.06.79 GB 7920157**

(43) Date of publication of application:
**07.01.81 Bulletin 81/01**

(45) Publication of the grant of the patent:
**10.04.85 Bulletin 85/15**

(84) Designated Contracting States:
**AT BE DE FR GB IT NL SE**

(56) References cited:
**BE-A- 512 671**
**FR-A-2 089 016**
**FR-A-2 265 002**
**GB-A-1 165 151**
**GB-A-2 052 763**
**US-A-3 378 219**

(73) Proprietor: **UNITED GAS INDUSTRIES LIMITED**
**3-4, Bentinck Street**
**London W1M 6DH (GB)**

(72) Inventor: **Pye, Alfred Edward**
**20, Selbourne Avenue**
**Tolworth Surrey (GB)**

(74) Representative: **Betteridge, Eileen Margaret**
**216, Rowan Road**
**Streatham Vale London, SW16 5HX (GB)**

Courier Press, Leamington Spa, England.

Description

This invention relates to dry gas meters of the kind in which back-and-forth movements of diaphragms in gas chambers are transmitted from a flag rod through a lever drive mechanism to operate valves for the admission and release of gas from the chambers.

The lever drive mechanisms have in the past required skilful assembly work. For instance, as shown in GB—A—1,165,151, all the items of the mechanism are screwed or bolted together, requiring considerable assembly time. Such mechanisms have usually been made of metal items which lend themselves to screwed or bolted connections.

The invention provides a gas meter of the kind in which back-and-forth movements of diaphragms in gas chambers are transmitted from oscillating flag rods through a lever drive mechanism to operate valves for the admission of gas to the chambers characterized by said lever drive mechanism being formed entirely of members of resilient plastics material, which have connections which are releasably secured together by resiliently forcing a post on one member into an opening on another member, the respective openings and posts all being arranged so that the forces to which they are subjected in use do not tend to disengage the posts from the openings.

The advantages of the invention are that the previous metal items of the lever drive mechanisms have been replaced by items of resilient plastics material and the connections of these items have been made quick and easy to make, so reducing the time required for assembly. Moreover, although the items of resilient plastics material would be considered to suffer the disadvantage of being somewhat unsuitable for making screwed connections since the threads tend to strip, this has according to the invention been turned into an advantage, since the forms of connections used have no screw threads but are also more easily made than threaded connections. The possible difficulty that such connections might become easily detached in use has been overcome, since it has been discovered that the forces met in use can be arranged to act in directions not tending to disconnect the connections.

A specific embodiment of the invention is shown in the accompanying drawings in which:—

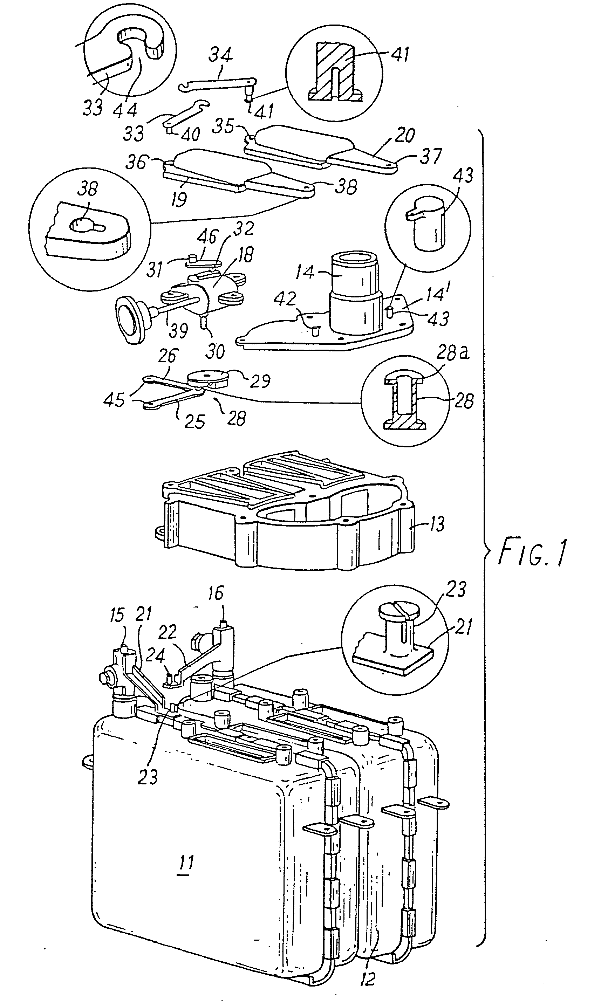

Figure 1 is an exploded perspective view of a gas meter of the kind described, with insets of details of various parts, and

Figure 2 is a detail of the arrangement of a crank drive mechanism of Figure 1.

The meter comprises a pair of gas chambers (11, 12) each divided by a flexible diaphragm, the chambers on each side of the diaphragm being alternately supplied with gas via valve openings in seat (13). Gas exhausts from the chambers through an exhaust tube (14), carried on a plate (14') secured to seat (13).

Each diaphragm carries a flag rod connector (not shown) for instance of the kind described in EP—A—0021 639 (having the same priority date as this application). Back-and-forth movements of each diaphragm are translated into oscillating movements of metal flat rods (15, 16) which extend in gas-tight manner out of the gas chambers to be connected to a lever drive mechanism. The lever drive mechanism transmits the oscillating movement of the flag rods to valves (19, 20) and to an index (not shown).

The lever drive mechanism is formed entirely of members made in a resilient plastics material, e.g. acetal. Flag arms (21, 22) are screwed tightly onto the flag rods and are directed downwardly from the flag rods. At their lower ends they carry upwardly directed pins (23, 24) over which openings (45) in the ends of crank levers (25, 26) are spring fitted, so allowing the levers to be pivotally attached to the flag arms by simply pushing them over the pins. The pins have their upper ends of slightly increased diameter, as shown in the inset, such that the openings in the levers have to be forced over them, the openings then being a loose fit on the lower portion of the pins but retained thereon by the increased diameter upper ends. It will be appreciated that the drive transmitted through the pins tends to produce forces normal to the pin axes, which do not tend to pull the pins out of the openings. They can, however, be dismounted when required by sufficient upward pressure. The crank levers (25, 26) are at their other ends loosely threaded onto a common pivot pin (28) seen best in the inset, which is a spring fit in a tangent member (29) described in more detail in EP—A—0 021 615 (having the same priority date as this application), the pin (28) having an increased diameter upper end (28a) similar to pins (23, 24).

The tangent member (29) drives a spindle (30) of a gear box (18), the spindle emerging at the top of the gear box to drive a crank drive (46) having two opposed acetal crank pins (31, 32). The gear box shaft (39) drives an index (not shown) for recording the volume of gas measured by the meter.

Two acetal valve-operating levers (33, 34) each have one end formed with a hooked opening (44) which is a spring fit on one of the crank pins (31, 32). The open mouth of the hook is slightly smaller than the diameter of the corresponding crank pin, so that it can be forced onto the crank pin by resilient deformation of the hook, but remains connected until sufficient force is applied to it to disconnect it. The other ends of the levers have downwardly directed pins (40, 41) which are spring fits in openings (35, 36) in the valves (19, 20), the pins having increased diameter ends like pins (23, 24, 28). The valves have key-hole shaped slots (37, 38) in which engage pins (42, 43), each pin having a key-hole shaped top as seen best in the inset. To mount the valves on the pins, the key-holes of the pin heads are aligned with the key-hole slots, and passed through the slots. When the heads emerge from the slots, the valves are turned with respect to the pins so that the key-holes are no longer aligned and the valves cannot be removed. The positions of the key-holes are chosen so that in use the valves never enter the position in which the key-holes are aligned and the pins can be withdrawn. However, in deliberate disassembling, the pins (40, 41) can be removed and the valves then swivelled to the position in which the key-holes are aligned. The engagement of the pins (42, 43) on the valves affords a pivotal mounting, the valves being reciprocated back-and-forth in an angle about pins (42, 43), driven through the levers (33, 34). In this movement the valve openings in seat (13) are opened and closed in timed relationship.

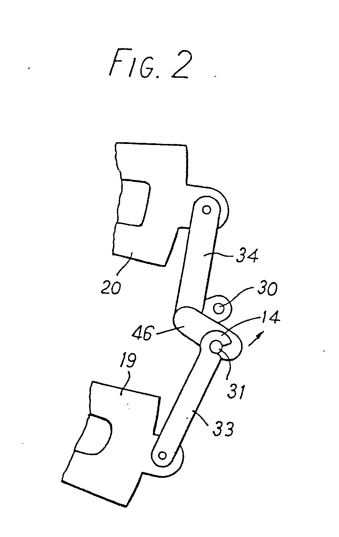

In order to obtain a continuous movement with no 'dead' position, the movement of one diaphragm leads the other. It will therefore be seen that the valves (19, 20) must oscillate out of phase with one another. Each valve as it reaches the end of an oscillation has a brief dwell period when it is effectively stationary. The crank angles of the crank pins (31, 32) are designed with relation to the angles of levers (33, 34) so that the pins are moving in the direction toward the open mouths of the hooks of levers (33, 34) generally during this dwell period, so that there is little or no resistance to the movement of the pins. At all other times of the oscillation the pressure applied by the pins to the levers is contained within the circle of the enclosing hook. By arranging for the moment when the pressure would tend to disengage the hook to coincide with a point at which little or no drive is being transmitted the likelihood of disengagement is much reduced. Figure 2 shows the position when valve (19) is at its bottom-most position as seen in the Figure at its stationary point. Crank (46) is positioned so that crank pin (31) would tend to move out of the mouth of hook (44), if there had been driving pressure between the pin and the lever (33).

### Claims

1. A gas meter of the kind in which back-and-forth movements of diaphragms in gas chambers (11, 12) are transmitted from oscillating flag rods (15, 16) through a lever drive mechanism to operate valves (19, 20) for the admission of gas to the chambers characterized by said lever drive mechanism being formed entirely of members (18, 21, 22, 23, 24, 25, 26, 28, 29, 30, 31, 32, 33, 34, 40, 41, 46) of resilient plastics material, which have connections which are releasably secured together by resiliently forcing a post (23, 24, 28, 31, 32, 40, 41) on one member into an opening (35, 36, 44, 45) on another member, the respective openings and posts all being arranged so that the forces to which they are subjected in use do not tend to disengage the posts from the openings.

2. A gas meter as claimed in claim 1, further characterized by a first series of said connections having posts (23, 24, 40, 41) having ends of increased diameter which may be resiliently forced axially through respective openings, the forces to which said posts are subjected in use being normal thereto with no axial component tending to disengage the posts and by a second series of said connections having openings (44) comprising a hooked shape which may be resiliently forced over respective posts (31, 32) in a direction normal thereto, the forces between the posts and the openings in use being such that little or no pressure is applied from the posts in the direction toward the open mouths of the hooks.

3. A gas meter as claimed in claim 2, further characterized by said second series of connections being between a crank drive (46) having two opposed crank pins (31, 32) and two valve-operating levers (33, 34) carrying at one end said hook-shaped openings (44) which are resiliently forced over said crank pins, the other ends of said valve-operating levers (33, 34) having connections of the kind of said first series to the ends of pivotal slide valves (19, 20).

4. A gas meter as claimed in claim 3, further characterized by said lever drive mechanism including flag arms (21, 22) secured to be oscillated by the flag rods (15, 16) and having connections of the kind of said first series to a pair of crank levers (25, 26) which are adapted to rotate a spindle (30) which is adapted to drive a gear box (18) as well as said crank drive (46).

5. A gas meter as claimed in claim 4, further characterized by said flag arms (21, 22) being downwardly directed from the flag rods (15, 16) whereby the overall height of the lever drive mechanism is kept to a minimum.

### Revendications

1. Un compteur de gaz du type dans lequel des mouvements alternatifs de membranes dans les chambres à gaz (11, 12) sont transmis à partir de tiges de signalisation oscillantes (15, 16) par l'intermédiaire d'un mécanisme d'entraînement à levier pour actionner les clapets (19, 20) pour l'admission de gaz dans les chambres caractérisé par le fait que ledit mécanisme d'entraînement à levier est constitué entièrement par des éléments (18, 21, 22, 23, 24, 25, 26, 28, 29, 30, 31, 32, 33, 34, 40, 41, 46) en matière plastique élastique, possédant des raccordements assemblés de façon libérable par l'amenée à force de façon élastique d'un axe (23, 24, 28, 31, 32, 40, 41) sur l'un des éléments dans une ouverture (35, 36, 44, 45) sur un autre élément, les ouvertures et axes respectifs étant disposés de façon que les forces auxquelles ils sont soumis lors du fonctionnement ne tendent pas à libérer les axes des ouvertures.

2. Un compteur de gaz conforme à la revendication 1, caractérisé en outre par le fait qu'une première série desdits raccordements comporte des axes (23, 24, 40, 41) présentant des extrémités à diamètre accru pouvant être amenées à force de façon élastique, axialement à travers les ouvertures respectives, les forces auxquelles lesdits montants sont soumis lors du fonctionnement étant normales à ces derniers, sans composant axial tendant à libérer les montants et par le fait que la deuxième série desdits raccordements comporte des ouvertures (44) affectant une forme de crochet pouvant être amené à force de façon élastique sur les montants respectifs (31, 32) dans un sens perpendiculaire à ceux-ci, les forces entre les montants et les ouvertures lors de l'utilisation étant telles que peu ou pas de pression n'est appliquée à partir des montants vers les embouchures ouvertes des crochets.

3. Compteur de gaz conformément à la revendication 2, caractérisé en outre par le fait que ladite deuxième série de raccordements est située entre un entraînements coudé (46) présentant deux axes manivelle en opposition (31, 32) et deux leviers d'actionnement de clapet (33, 34) portant en l'une de leurs extrémités lesdites ouvertures en forme de crochet (44) amenées à force élastiquement sur lesdits axes manivelle, les autres extrémités desdits leviers d'actionnement de clapet (33, 34) présentant des raccordements du type de ladite première série aux extrémités de clapets à tiroir à articulation (19, 20).

4. Un compteur de gaz conformément à la revendication 3, daractérisé en outre par le fait que ledit mécanisme d'entraînement comporte des bras de signalisation (21, 22) fixés de façon à pouvoir être mise en oscillation par les tiges de signalisation (15, 16) et présentant des connexions du type de ladite première série à une paire de leviers coudés (25, 26) adaptés de façon à faire tourner un axe fileté (30) lui-même adapté pour entraîner un réducteur (18) ainsi que ledit entraînement coudé (46).

5. Compteur de gaz conforme à la revendication 4, caractérisé en outre par le fait que lesdits bras de signalisation (21, 22) sont normalement orientés vers le bas à partir des tiges de signalisation (15, 16), la hauteur globale du mécanisme d'entraînement à levier étant ainsi maintenue au minimum.

## Patentansprüche

1. Ein Gaszahler der Art, bei der die Bewegungen der Membranen in den Gaskammern (11, 12) von oszillierenden stehenden Wellen (15, 16) über eine Hebelantriebsmechanismus übertragen werden, um die Ventile (19, 20) in Betrieb zu setzen, welche das Gas in die Kammern einlassen, hat als besondere Merkmale den besagten Hebelantriebsmechanismus, der ganzlich aus den Bauteilen (18, 21, 22, 23, 24, 25, 26, 28 29, 30, 31, 32, 33, 34, 40, 41, 46) besteht, die aus widerstandskraftigem Kunststoff gefertigt sind. Diese Bauteile haben wieder lösbare Spanndruckverbindungen von Zapfen (23, 24, 28, 31, 32, 40, 41) auf einem Bauteil und Öffnungen (35, 36, 44, 45) an anderen. Die Zapfen und Öffnungen sind so ausgelegt, daß die bei Betrieb wirkenden Krafte die Verbindungen nicht lösen.

2. Ein Gaszahler wie unter 1. behauptet, das weiter dadurch charakterisiert wird, daß ein Teil der erwähnten Verbindungen Zapfen (23, 24, 40, 41) mit oberen Enden hat, die einen stärkeren Durchmesser besitzen, und die dauerhaft durch axialen Druck in die entsprechenden Öffnungen gezwungen werden können. Die bei Betrieb normal wirkenden Kräfte lösen diese Verbindungen nicht. Ein zweiter der Verbindungen (44) hat eine Hakenform, die dauerhaft auf die entsprechenden Zapfen (31, 32) gezwungen werden können. Die bei Betrieb auf die Zapfen und Öffnungen wirkenden Kräfte sind derart gering oder gar nicht vorhanden, daß keinerlei Druck der Zapfen in Richtung Hakenöffnung ausgeübt wird.

3. Ein Gaszähler wie unter 2. behauptet, das weiter charakterisiert wird, durch den erwähnten zweiten Teil der Verbindungen zwischen einem Kurbelantrieb (46) mit zwei gegenüberliegenden Kurbelzapfen (31, 32) und zwei Ventilhebeln (33, 34), die an einem Ende die besagte hakenförmige Öffnungen (44) besitzen, die dauerhaft auf die erwähnten Kurbelzapfen gezwungen werden können, während die beiden anderen Enden der Ventilhebel (33, 34) Verbindungen der ersterwähnten Art mit den Enden der Drehgleitventile (19, 20) aufweisen.

4. Ein Gaszähler wie unter 3. behauptet, der weiter charakterisiert wird durch den besagten Hebelantriebsmechanismus einschließlich der Wellenhebel (21, 22), die durch die stehenden Wellen (15, 16) oszilliert werden und Verbindungen der erstgenannten Art mit zwei Kurbelhebeln (25, 26) besitzen, die so ausgelegt sind, daß sie eine Spondel (30) drehen, die wiederum ein Getriebe (18) antreibt sowie den besagten Kurbelantrieb (46).

5. Ein Gaszähler wie unter 4. behauptet, der weiter charakterisiert wird durch die Wellenarme (21, 22), die von den stehenden Wellen (15, 16) nach unten gerichtet sind, wodurch die Gesamthöhe des Hebelantriebsmechanismus auf ein Minimum beschränkt wird.

*FIG. 1*

FIG. 2